# EUROPEAN PATENT SPECIFICATION

(11) **EP 1 033 512 B1**
(45) Date of publication and mention of the grant of the patent: **15.09.2004**
(21) Application number: 99100629.7
(22) Date of filing: 14.01.1999
(51) Int. Cl.: F16J 15/12

(54) **T-joint gasket assembly**
Dichtungsanordnung für eine T-Verbindung
Joint d'étanchéité en T

(43) Date of publication of application: 06.09.2000
(73) Proprietor: Carl Freudenberg KG, 69469 Weinheim (DE)
(72) Inventor: Noble, Lane, Novi, Michigan 48375 (US); Boardman, Thomas, Gilford, New Hampshire 03246 (US)

(56) References cited:
- DE-A- 3 831 414
- DE-A- 3 831 415
- DE-C- 19 507 231
- US-A- 4 930 792

## Description

The present invention relates to a gasket assembly according to the preamble of claim 1, and in particular, to an improved T-joint gasket assembly which does not use RTV sealant, which is defined as a substance being vulcanizable at low temperatures.

Gaskets are used to provide a leak proof seal between two engine parts or other devices. Typically, the parts being sealed include flat sealing surfaces which are adjacent to one another during use. The gasket is usually placed between the opposite surfaces of the two components and compressed between them to prevent the escape of a gas, fluid or other medium. Many different variations and structures have been used in the prior art for gaskets and their sealing arrangements.

From DE 38 31 415 A1 there is known a gasket assembly according to the preamble of claim 1.

A particular problem has arisen in prior art seals which are used at a T-joint. A T-joint occurs at the intersection of three sealing surfaces. Such a T-joint may be found between a front cover, an oil pan and an engine block in an automotive engine. Many of the prior art attempts at providing a seal for such a T-joint have either used a sealant or caulking medium such as a RTV (room temperature vulcanising) sealant or have used key and hole arrangements having flat surfaces in an attempt to provide a leak proof seal environment.

Both of the above prior art attempts at sealing a T-joint have not been successful in terms of costs and problems with application. First the sealing or caulking medium that is used such as a RTV sealant is very costly, messy and difficult to service. RTV sealant has also been known to effect the seal environment by over filling the adjacent trench in which the gasket sits thus providing a gap where fluid and/or gas may leak around the seal. Another problem is that the RTV sealant used in such seals hardens over time and cracks thus creating a leak around the sealing element.

The other type of seal arrangement is the key and hole which has flat surfaces that are prone to failure because of the relatively small amount of shift allowed in the mating components. This results in less than desirable interlocking and insufficient seal between the T-joint elements.

Therefore, there is a need in the art for a T-joint seal that is easy to install, relatively inexpensive and prone to last longer than the RTV sealant based seals.

One object of the present invention is to provide a RTV-less seal for a T-joint assembly.

Another object of the present invention is to provide a seal assembly that limits the need for a secondary sealant at multiple joint interfaces.

Yet a further object of the present invention is to provide a seal element that eliminates the need for an engine assembly line purge due to the hardening effect of RTV sealants.

A further object of the present invention is to provide a seal assembly that enables reusability of gaskets in service.

Yet another object of the present invention is to provide a seal assembly that reduces the cost and improves the cleanliness of the engine assembly process.

According to the present invention there is provided a gasket assembly as set out in claim 1.

Preferred embodiments are subject matters of subclaims 2 to 14.

One advantage of the present invention is that it will eliminate the need for secondary sealant in multiple joint interfaces.

A further advantage of the present invention is that it eliminates the need for engine assembly line purges due to the hardening effect of RTV sealants.

Yet a further advantage of the present invention is that it enables the reusability of gaskets while in service.

A further advantage of the present invention is that it reduce costs and improves the cleanliness of the engine assembly process.

Other objects, features and advantages of the present invention will become apparent from the subsequent description and appended claims, taken in conjunction with the accompanying drawings.

### BRIEF DESCRIPTION OF THE DRAWINGS

FIG 1 shows a plan view of the present invention.
FIG 2 shows a cross section of a T-joint interface with the present invention.

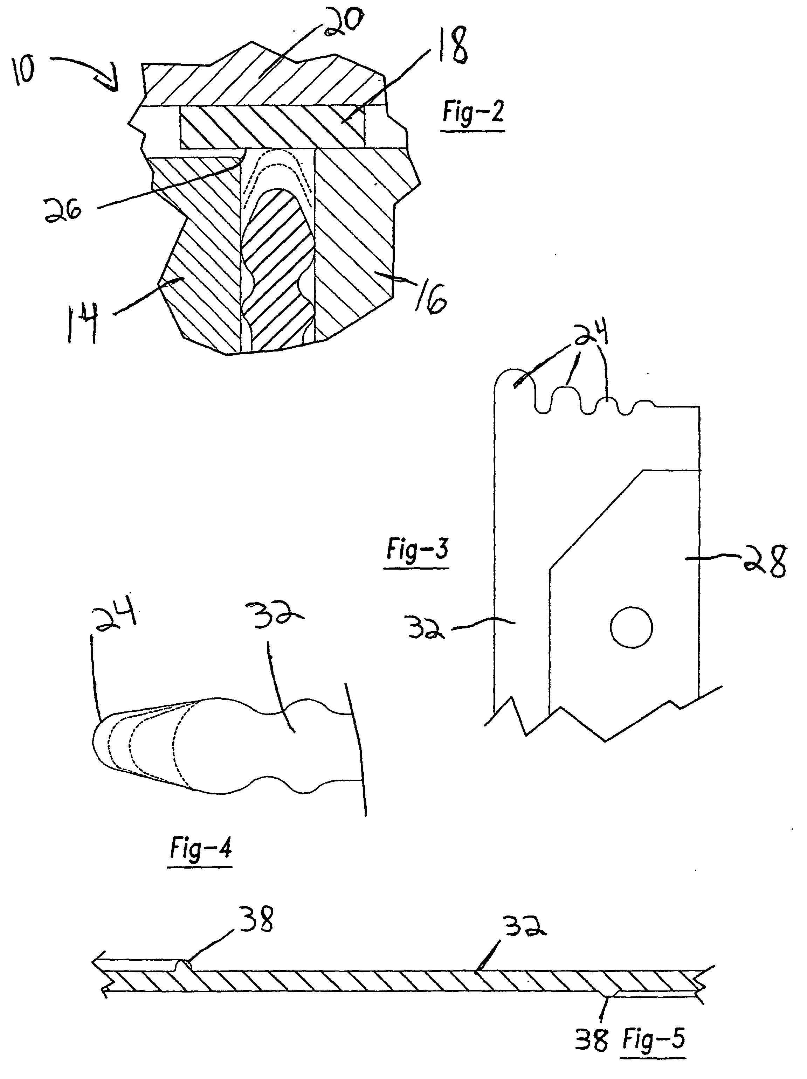

FIG 3 shows the sealing beads at the end of the seal member.
FIG 4 shows a side view of the sealing beads.
FIG 5 shows a cross section of the sealing member.

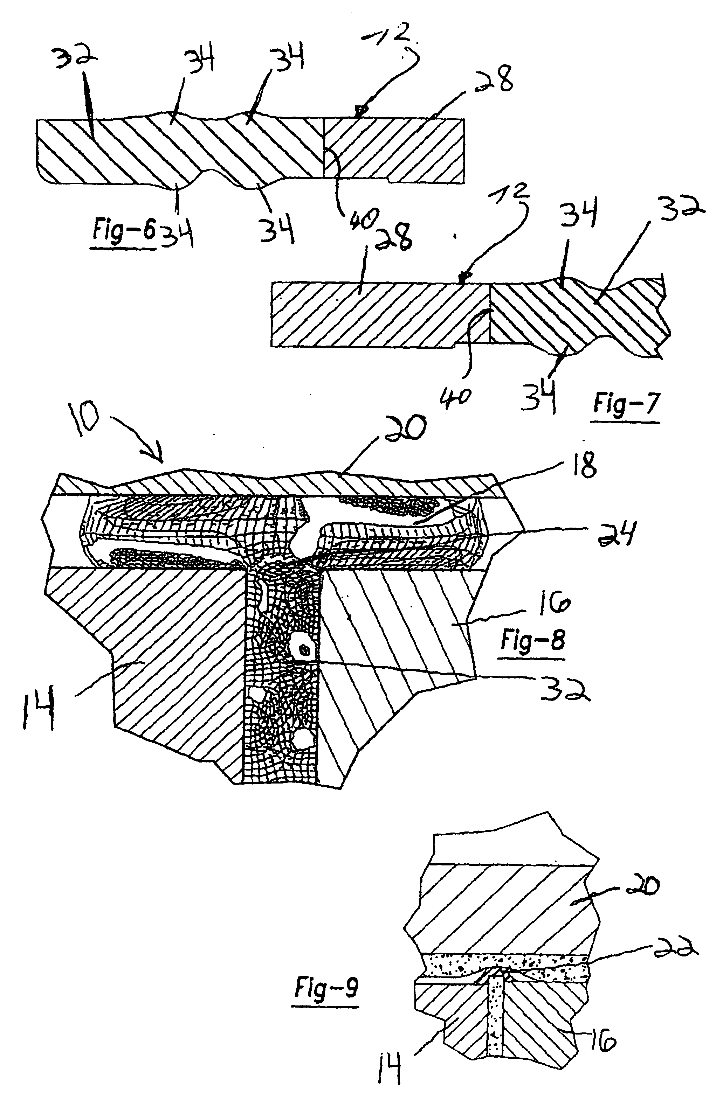

FIG 6 shows a cross section of the first gasket.
FIG 7 shows a cross section of the first gasket.
FIG 8 shows the T-joint seal after compression.
FIG 9 shows a prior art RTV seal joint.

Referring to the drawings, a gasket assembly 10 for use in a T-joint or multiple joint interface is shown. The gasket assembly 10 includes a first gasket 12 which generally has a U-shaped design. However, it should be noted that other shapes can be used depending on the need and the multiple joint interface to be sealed. The first gasket 12 is used to seal between a first 14 and second sealing surface 16. The first 14 and second sealing surface 16 can be the oil pan and engine block but may be other components found in the automotive engine. The first gasket 12 interacts and mates with a second gasket 18 to form a gasket assembly 10. The second gasket 18 is placed between a third sealing surface 20 such as a front cover and the above mentioned engine block and oil pan. A three surface interface such as described above that need sealing have also been known as T-joints. A T-joint seal in the T-joint will prevent leakage of a liquid or gas from the three surface interface.

The gasket assembly 10 of the present invention is a RTV-less gasket assembly. Prior art seals have used a RTV sealant 22 to provide a seal at the multiple joint interface as shown in FIG 9. But the prior art seal experienced problems in that the RTV sealant 22 if not applied precisely could potentially interfere with the function of the gasket. Additionally, if the RTV was left applied to the T-joint during an assembly line shutdown then the hardening of the RTV would not perform its function and would tend to harden and become brittle over time in the automotive engine environment. This hardening and brittleness of the RTV causes uneven sealing surfaces thus creating a leaking environment within the T-joint.

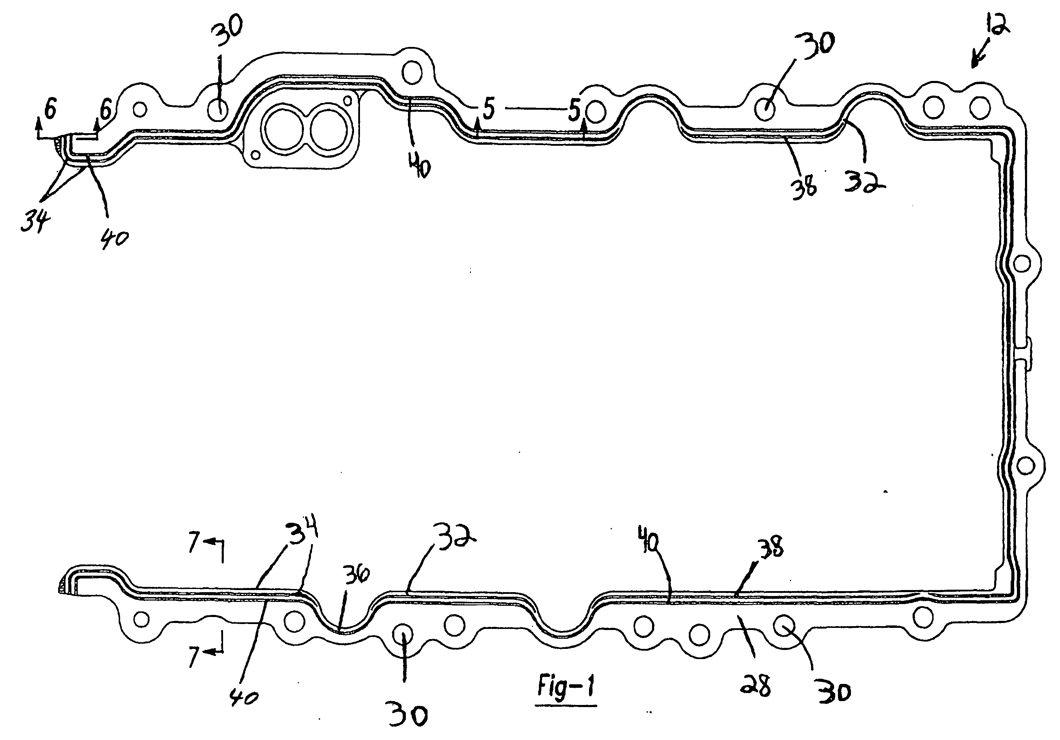

The present invention involves a RTV-less gasket with a sealing bead 24 which will interact and mate with a sealing pad 26 from the second gasket 18 to create a leak free seal at the T-joint interface. It should be noted the sealing pad 26 is preferably made of an elastomer material but any other type of resilient material such as rubber, soft plastic, or any other soft material may be used. The first gasket 12 is shown in FIG 1 and includes a core member 28 having a plurality of orifices 30 for use in aligning and securing the first gasket 12 between the first 14 and second sealing surfaces 16. In the preferred embodiment the core member 28 is made of a metal material but it should be noted that any type of hard ceramic, plastic material or any other type of metal may be used.

One of the sealing member 32 generally has a U-shaped design along the plane of sealing and is connected to the inside surface of the core member 28. The sealing member 32 is preferably made of an elastomer material but any other type of resilient rubber, ceramic or plastic material may be used as the sealing member. The sealing member 32 typically includes a dual sealing ridge or rib 34 around its entire periphery. The sealing ridge 34 at times converges into a single sealing ridge 36 but still provides for at least one sealing ridge around the entire upper and lower surface of the sealing member 32. The sealing ridge 34 is used to create the seal between the first 14 and second surfaces 16 such as the engine block and oil pan. Between the pair of sealing ridges 34 located on the top and bottom surfaces of the sealing member 32 are a spacer or separator member 38 which insures that the sealing ridges maintain a degree of separation from each other thus creating a better sealing surface and seal between the first 14 and second sealing surfaces 16. A plurality of the separator members 38 occur at regular intervals between the sealing ridges 34 on the sealing member 32. The sealing member 32 is preferably directly molded on the core members inner surface 40 but it should be noted other methods such as direct bonding or any other type of securing method can be used. The sealing ridges 34 found on the sealing members top and bottom surfaces extend beyond the flat side surfaces of the core member 28, insuring that the sealing member 32 provides the necessary seal and that the core member 28 provides stability and proper alignment of the gasket between the sealing surfaces (14, 16).

A plurality of sealing beads 24 extend from each end of the seal member 32. The sealing beads 24 use the sealing ridges 34 as center lines for the beads themselves. The sealing ridges 24 gradually end at the sealing beads 24. In the preferred embodiment there are three sealing beads each of which extend outwardly from the seal member 32. Each of the sealing beads 24 extend a predetermined distance or height from the sealing member 32. The height can range from 5 millimeters down to 0.25 millimeters but in the preferred embodiment the height ranges from 3 millimeters to 1 millimeter. After installation of the first gasket member 12 between the first and second sealing surfaces (14, 16) at least one of the sealing beads 24 extend from the first and second sealing surfaces. At least one sealing bead must extend from the first and second sealing surface in order to interengage or mate with a seal pad 26 from a second gasket 18 which is placed between a third sealing surface 20 and the combined first and second sealing surfaces (14, 16).

A second gasket 18 is used in the gasket assembly 12 and is placed between a third sealing surface 20 and the combined first and second sealing surface which meet at a T-joint or multi-joint interface. The third sealing surface 20 usually is found on a front cover of an automotive engine. At least one of the sealing beads 24 protrudes from the first sealing joint and interengages with a sealing pad 26 of the second gasket 18 which is found between the third sealing surface and the combined first and second sealing joint. The resilient sealing beads 24 will create a leak free seal with the sealing pad 26 of the second gasket 18 thus providing a RTV-less T-joint seal. If all three of the sealing beads 24 protrude from the first sealing joint then all three will interengage and create a leak free seal with the seal pad 26 of the second gasket 18, it should be noted that only one sealing bead 24 needs to interact and interengage with the sealing pad 26 of the second gasket 18 to create a leak free T-joint seal. It should be noted that the preferred embodiment uses three sealing beads 24 but a plurality of sealing beads 24 may be used depending on the operating environment of the automotive engine being used. The sealing beads heights vary from one and another but are at least equal to the total tolerances allowed for between the third sealing surface and the first joint surface.

In the preferred embodiment the first sealing joint provides a near flush condition for the second sealing joint at the intersection of the T-joint. The near flush condition would provide a single plane for the T-joint seal without the use of liquid sealants. Thus the first sealing joint in the preferred embodiment creates a flat surface with only the sealing beads 24 extending or creating any uneven surface along the first sealing joint. This prevents and eliminates the use of any RTV sealant and thus further reduces the cost of manufacturing and replacing seals that are used in T-joint sealing interfaces.

## Claims

1. A gasket assembly for providing a leak free seal at a T-joint including a first gasket (12), a first sealing surface (14) and a second sealing surface (16), said first gasket (12) being placed between said first sealing surface (14) and said second sealing surface (16) forming a first sealing joint, said first gasket (12) having a core member (28) having a plurality of orifices (30) and a seal member (32) connected to a side of said core member (28), said seal member (32) having at least one sealing ridge (34) on a top and bottom surface of said seal member (32), and including a second gasket (18) having a sealing pad (26) and a third sealing surface (20), said second gasket (18) being placed between said third sealing surface (20) and said first sealing joint so as to form a second sealing joint **characterized by** at least one sealing bead (24) located on an end of said seal member (32) of said first gasket (12), said sealing bead (24) protrudes from said first sealing joint and interengages with said sealing pad (26) of said second gasket (18).

2. A gasket assembly according to claim 1, **characterized in that** there is provided a plurality of sealing beads (24) having predetermined heights that vary from one another and at least one of said sealing beads (24) interengages with said sealing pad (26) of said second gasket (18).

3. A gasket assembly according to claim 2, **charaterized** that said plurality of sealing beads (24) includes a first sealing bead (24), a second sealing bead and a third sealing bead (24), wherein said first sealing bead (24) having a predetermined height, said second sealing bead (24) having a predetermined height greater than said height of said first sealing bead (24), and said third sealing bead (24) having a predetermined height greater than said height of said second sealing bead (24).

4. The gasket assembly according to any one of claims 1 to 3, wherein said first sealing joint provides a flush surface for said second sealing joint.

5. The gasket assembly according to any of preceding claims, wherein said seal member (32) is made of an elastomer material.

6. The gasket assembly according to any of preceding claims, wherein said core member (28) is made of a metal material.

7. The gasket assembly according to any of preceding claims, wherein said sealing beads (24) are an elastomer material.

8. The gasket assembly according to claim 6, wherein said core member (28) is made of aluminium.

9. The gasket assembly according to any of preceding claims, wherein said sealing ridge (34) is a dual side by side ridge.

10. The gasket assembly according to claim 9, wherein said sealing ridge (34) extends beyond a top and bottom surface of said core member (28).

11. The gasket assembly according to claim 9 or 10, wherein said sealing ridge (34) is separated by a spacer member (38).

12. The gasket assembly according to any of preceding claims, wherein said first sealing joint provides a near flat single plane surface for said second sealing joint creating said T-joint seal

13. The gasket assembly according to claim 12, wherein said first and second sealing surfaces (14, 16) forming said first sealing joint are secured with one another and said first gasket (12) is placed between said sealing surfaces (14, 16).

14. The gasket assembly according to claim 13, wherein said first and second sealing surfaces (14, 16) are formed by an engine block and an oil pan.

## Patentansprüche

1. Dichtungsanordnung zur Bereitstellung einer leckfreien Dichtung an einer T-Verbindung mit einer ersten Dichtung (12), einer ersten Dichtfläche (14) und einer zweiten Dichtfläche (16), wobei die erste Dichtung (12) zwischen der ersten Dichtfläche (14) und der zweiten Dichtfläche (16) angeordnet ist, wodurch eine erste Dichtungsverbindung gebildet wird, wobei die erste Dichtung (12) ein Kernglied (28) mit mehreren Öffnungen (30) und ein mit einer Seite des Kernglieds (28) verbundenes Dichtungsglied (32) aufweist, wobei das Dichtungsglied (32) an seiner Ober- und Unterseite mindestens einen Dichtsteg (34) aufweist, und mit einer zweiten Dichtung (18), die ein Dichtkissen (26) und eine dritte Dichtfläche (20) aufweist, wobei die zweite Dichtung (18) zwischen der dritten Dichtfläche (20) und der ersten Dichtungsverbindung angeordnet ist und so eine zweite Dichtungsverbindung bildet, **gekennzeichnet durch** mindestens einen Dichtungswulst (24), der an einem Ende des Dichtungsglieds (32) der ersten Dichtung (12) angeordnet ist, wobei der Dichtungswulst (24) aus der ersten Dichtungsverbindung ragt und mit dem Dichtkissen (26) der zweiten Dichtung (18) in Eingriff steht.

2. Dichtungsanordnung nach Anspruch 1, **dadurch gekennzeichnet, dass** mehrere Dichtungswülste (24) vorgesehen sind, die eine vorbestimmte Höhe aufweisen, die sich jeweils voneinander unterscheiden, und mindestens einer der Dichtungswülste (24) mit dem Dichtkissen (26) der zweiten Dichtung (18) in Eingriff steht.

3. Dichtungsanordnung nach Anspruch 2, **dadurch gekennzeichnet, dass** die mehreren Dichtungswülste (24) einen ersten Dichtungswulst (24), einen zweiten Dichtungswulst und einen dritten Dichtungswulst (24) enthalten, wobei der erste Dichtungswulst (24) eine vorbestimmte Höhe aufweist, der zweite Dichtungswulst (24) eine vorbestimmte Höhe aufweist, die größer ist als die Höhe des ersten Dichtungswulstes (24), und der dritte Dichtungswulst (24) eine vorbestimmte Höhe aufweist, die größer ist als die Höhe des zweiten Dichtungswulstes (24).

4. Dichtungsanordnung nach einem der Ansprüche 1 bis 3, bei der die erste Dichtungsverbindung eine bündige Fläche für die zweite Dichtungsverbindung bereitstellt.

5. Dichtungsanordnung nach einem der vorhergehenden Ansprüche, bei der das Dichtungsglied (32) aus einem elastomeren Material besteht.

6. Dichtungsanordnung nach einem der vorhergehenden Ansprüche, bei der das Kernglied (28) aus einem Metallmaterial besteht.

7. Dichtungsanordnung nach einem der vorhergehenden Ansprüche, bei der die Dichtungswülste (24) aus einem elastomeren Material bestehen.

8. Dichtungsanordnung nach Anspruch 5, bei der das Kernglied (28) aus Aluminium besteht.

9. Dichtungsanordnung nach einem der vorhergehenden Ansprüche, bei der der Dichtsteg (34) ein nebeneinander liegender Doppelsteg ist.

10. Dichtungsanordnung nach Anspruch 9, bei der sich der Dichtsteg (34) über eine Ober- und Unterseite des Kernglieds (28) hinaus erstreckt.

11. Dichtungsanordnung nach Anspruch 9 oder 10, bei der der Dichtsteg (34) von einem Abstandsglied (36) getrennt ist.

12. Dichtungsanordnung nach einem der vorhergehenden Ansprüche, bei der die erste Dichtungsverbindung eine fast flache Fläche mit einer Ebene für die zweite Dichtungsverbindung bereitstellt, wodurch die T-Verbindungsdichtung geschaffen wird.

13. Dichtungsanordnung nach Anspruch 12, bei der die erste und die zweite Dichtfläche (14, 16), die die erste Dichtungsverbindung bilden, aneinander befestigt sind und die erste Dichtung (12) zwischen den Dichtflächen (14, 16) angeordnet ist.

14. Dichtungsanordnung nach Anspruch 13, bei der die erste und die zweite Dichtfläche (14, 16) durch einen Motorblock und eine Ölwanne gebildet werden.

## Revendications

1. Assemblage de joint pour fournir une étanchéité anti-fuites sur un joint en T, comprenant un premier joint (12), une première surface d'étanchéité (14) et une deuxième surface d'étanchéité (16), ledit premier joint (12) étant placé entre ladite première surface d'étanchéité (14) et ladite deuxième surface d'étanchéité (16) formant un premier joint d'étanchéité, ledit premier joint (12) ayant un élément formant noyau (28) ayant une pluralité d'orifices (30) et un élément formant joint (32) raccordé à un côté dudit élément formant noyau (28) ledit élément formant joint (32) ayant au moins une strie d'étanchéité (34) sur une surface supérieure et de base dudit élément d'étanchéité (32), et comprenant un deuxième joint (18) ayant un tampon d'étanchéité (26) et une troisième surface d'étanchéité (20) le second joint d'étanchéité (18) étant placé entre ladite troisième surface d'étanchéité (20) et ledit premier joint d'étanchéité de manière à former un deuxième joint d'étanchéité, **caractérisé par** au moins une nervure d'étanchéité (24) située sur une extrémité dudit élément d'étanchéité (32) dudit premier joint (12), ladite nervure d'étanchéité (24) fait saillie dudit premier joint d'étanchéité et s'interengage avec ledit tampon d'étanchéité (26) dudit deuxième joint (18).

2. Assemblage de joint selon la revendication 1, **caractérisé en ce qu'**il est prévu une pluralité de nervures d'étanchéité (24) ayant des hauteurs prédéterminées qui varient de l'une à l'autre et au moins une des nervures d'étanchéité (24) s'interengage avec ledit tampon d'étanchéité (26) dudit deuxième joint (18).

3. Assemblage de joint selon la revendication 2, **caractérisé en ce que** ladite pluralité de nervures d'étanchéité (24) comprend une première nervure d'étanchéité (24), une deuxième nervure d'étanchéité et une troisième nervure d'étanchéité (24), dans lequel ladite première nervure d'étanchéité (24) ayant une hauteur prédéterminée, ladite deuxième nervure d'étanchéité (24) ayant une hauteur prédéterminée plus grande que ladite hauteur de ladite première nervure d'étanchéité (24), et ladite troisième nervure d'étanchéité (24) ayant une hauteur prédéterminée plus grande que ladite hauteur de ladite deuxième nervure d'étanchéité (24).

4. Assemblage de joint selon l'une quelconque des revendications 1 à 3, dans lequel ledit premier joint d'étanchéité fournit une surface à fleur pour ledit deuxième joint d'étanchéité.

5. Assemblage de joint selon l'une quelconque des revendications précédentes, dans lequel ledit élément d'étanchéité (32) est fait d'un matériau élastomère.

6. Assemblage de joint selon l'une quelconque des revendications précédentes, dans lequel ledit élément formant noyau (28) est fait d'un matériau métallique.

7. Assemblage de joint selon l'une des revendications précédentes, dans lequel lesdites nervures d'étanchéité (24) sont un matériau élastomère.

8. Assemblage de joint selon la revendication 6, dans lequel ledit élément formant noyau (28) est fait d'aluminium.

9. Assemblage de joint selon l'une quelconque des revendications précédentes, dans lequel ladite strie d'étanchéité (34) est une strie double côte à côte.

10. Assemblage de joint selon la revendication 9, dans lequel ladite strie d'étanchéité (34) s'étend au-delà d'une surface supérieure et d'une surface de base dudit élément formant noyau ((28).

11. Assemblage de joint selon la revendication 9 ou 10, dans lequel ladite strie d'étanchéité (34) est séparée par un élément formant pièce d'écartement (38).

12. Assemblage de joint selon l'une des revendications précédentes, dans lequel ledit premier joint d'étanchéité fournit une surface plane simple presque plate pour ledit deuxième joint d'étanchéité créant ledit joint en T.

13. Assemblage de joint selon la revendication 12, dans lequel lesdites première et deuxième surfaces d'étanchéité (14, 16) formant ledit premier joint d'étanchéité sont fixées l'une à l'autre et ledit premier joint (12) est placé entre lesdites surfaces d'étanchéité (14, 16).

14. Assemblage de joint selon la revendication 13, dans lequel lesdites première et deuxième surfaces d'étanchéité (14, 16) sont formées par un bloc-moteur et un carter d'huile.
